# EUROPÄISCHE PATENTANMELDUNG

(11) **EP 3 460 442 A1**
(43) Veröffentlichungstag der Anmeldung: **27.03.2019**
(21) Anmeldenummer: 17192627.2
(22) Anmeldetag: 22.09.2017
(51) Int. Cl.: G01M 13/02, G01H 1/00, G01M 1/24, G01L 3/10, G01L 25/00

(54) **BEWEGUNGSMESSVORRICHTUNG, MASCHINE UND VERFAHREN ZUM KALIBRIEREN DER BEWEGUNGSMESSVORRICHTUNG**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft eine Bewegungsmessvorrichtung (3) für eine Bewegungsmessung einer Wellenrelativbewegung einer Welle (1), mit einer Hülse (18), die eingerichtet ist mit der Welle (1) in einer ersten Hülsenebene (15), die rechtwinklig zu einer Hülsenrotationsachse (27) der Hülse (18) liegt, und in einer zweiten Hülsenebene (17), die von der ersten Hülsenebene (15) in einer Axialrichtung bezogen auf die Hülsenrotationsachse (27) beabstandet ist, in einem Betrieb der Bewegungsmessvorrichtung (3) fest verbunden zu sein, und einem Sensor (8), der eingerichtet ist mindestens eine Hülsenrelativbewegung der Hülse (18) von der ersten Hülsenebene (15) zu der zweiten Hülsenebene (17) zu messen, wobei dadurch, dass, wenn die Hülse (18) in dem Betrieb mit der Welle (1) fest verbunden ist, die Wellenrelativbewegung der Welle (1) von der ersten Hülsenebene (15) zu der zweiten Hülsenebene (17) der Hülsenrelativbewegung im Wesentlichen entspricht, wodurch die Wellenrelativbewegung mittels einer Messung der Hülsenrelativbewegung von dem Sensor (8) bestimmbar ist.

## Beschreibung

Die Erfindung betrifft eine Bewegungsmessvorrichtung für eine Bewegungsmessung einer Wellenrelativbewegung einer Welle, eine Maschine mit der Bewegungsmessvorrichtung und ein Verfahren zum Kalibrieren der Bewegungsmessvorrichtung.

Eine Bewegungsmessung einer Wellenrelativbewegung einer Welle, beispielsweise eine Torsion aufgrund eines auf der Welle anliegenden Drehmoments, erfolgt herkömmlich über eine Messung einer Relativbewegung mit einem auf die Welle aufgebrachten Dehnmessstreifen. Eine Kalibrierung des Dehnmesstreifen ist somit nur direkt an der Welle, an der der Dehnmessstreifen angeordnet ist, durchführbar. Ist die Welle beispielsweise eine Turbinenwelle oder eine Generatorwelle für ein Kraftwerk, ist eine hohe Genauigkeit der Bestimmung der Relativbewegung wichtig, beispielsweise um Betriebsparameter des Kraftwerks, wie beispielsweise eine Leistung des Kraftwerks, mit einer hohen Genauigkeit zu bestimmen. Auch kann eine genaue Bestimmung der Relativbewegung erforderlich sein, um eventuell auftretende Schwingungen, beispielsweise Torsionsschwingungen, der Welle zu identifizieren.

Für die hohe Genauigkeit der Relativbewegung ist es erforderlich den Dehnmessstreifen zu kalibrieren. Dies ist nur möglich, wenn der Dehnmessstreifen auf die Welle aufgebracht ist. Dies ist jedoch nachteilig, weil die Kalibrierung an der Welle aufwändig ist und somit selten oder gar nicht durchgeführt wird, um die Stillstandzeiten des Kraftwerks zu minimieren, wodurch die Bestimmung der Relativbewegung mit dem Dehnmessstreifen eine niedrige Genauigkeit hat. Zudem ist dadurch, dass das Messsystem mit dem Dehnmessstreifen auf die Oberfläche der Welle aufgebracht ist, der Dehnmessstreifen schutzlos einer Verschmutzung, einer mechanischen Belastung und/oder einer thermischen Belastung ausgesetzt. Beispielhaft kann die Verschmutzung durch ein Schmieröl, eine Dampfbelastung oder eine Temperaturänderung des Dehnmessstreifens die Messung der Relativbewegung mittels des Dehnmessstreifens verfälschen und/oder eine neue Kalibrierung des Dehnmessstreifens erforderlich machen. Dies verringert die Genauigkeit der Bestimmung der Relativbewegung weiter.

Aufgabe der Erfindung ist es daher, eine Bewegungsmessvorrichtung für eine Bewegungsmessung einer Wellenrelativbewegung einer Welle, eine Maschine mit der Welle und ein Verfahren zum Kalibrieren der Bewegungsmessvorrichtung zu schaffen, die eine genauere Bestimmung einer Wellenrelativbewegung der Welle ermöglichen.

Die Aufgabe wird gelöst mit den Merkmalen der Patentansprüche 1, 10 und 13. Bevorzugte Ausführungsformen dazu sind in den weiteren Patentansprüchen angegeben.

Die erfindungsgemäße Bewegungsmessvorrichtung für eine Bewegungsmessung einer Wellenrelativbewegung einer Welle, weist eine Hülse, die eingerichtet ist mit der Welle in einer ersten Hülsenebene, die rechtwinklig zu einer Hülsenrotationsachse der Hülse liegt, und in einer zweiten Hülsenebene, die von der ersten Hülsenebene in einer Axialrichtung bezogen auf die Hülsenrotationsachse beabstandet ist, in einem Betrieb der Bewegungsmessvorrichtung fest verbunden zu sein, und einen Sensor auf, der eingerichtet ist mindestens eine Hülsenrelativbewegung der Hülse von der ersten Hülsenebene zu der zweiten Hülsenebene zu messen, wobei dadurch, dass, wenn die Hülse in dem Betrieb mit der Welle fest verbunden ist, die Wellenrelativbewegung der Welle von der ersten Hülsenebene zu der zweiten Hülsenebene der Hülsenrelativbewegung im Wesentlichen entspricht, wodurch die Wellenrelativbewegung mittels einer Messung der Hülsenrelativbewegung von dem Sensor bestimmbar ist. Dadurch, dass die Bewegungsmessvorrichtung mit der Hülse und dem Sensor vorgesehen ist, muss die Kalibrierung des Sensors nicht an der Welle vorgenommen werden, sondern die Kalibrierung des Sensors kann von der Welle getrennt und beispielsweise unter Laborbedingungen durchgeführt werden. Dadurch, dass die Kalibrierung nicht mehr direkt an der Welle erfolgt, reduziert sich der Aufwand für die Kalibrierung der Bewegungsmessvorrichtung. Auch ist es möglich die Kalibrierung öfter durchzuführen, wodurch die Genauigkeit der Bestimmung der Hülsenrelativbewegung weiter erhöht werden kann. Außerdem ist der Sensor durch das Vorsehen der Hülse nicht mehr unmittelbar auf der Welle aufgebracht, sondern in einem Abstand zu dieser angeordnet. Dadurch ist der Sensor weniger einer Erwärmung durch die Welle ausgesetzt und weniger einem Schmieröl ausgesetzt, wodurch der Sensor besser vor einer Verschmutzung durch das Schmieröl, einer mechanischen Belastung oder einer thermischen Belastung geschützt ist. Dies wirkt einer Verfälschung der Messung entgegen und erhöht dadurch weiter die Genauigkeit der Bestimmung der Hülsenrelativbewegung.

Auch ist es möglich der Bewegungsmessvorrichtung vor ihrem Kalibrieren und/oder vor ihrem Betrieb an der Welle einem Funktionstest zu unterziehen. Beispielsweise ist es dazu möglich mindestens ein Drehmoment auf die Hülse anzuwenden und zeitgleich die Hülsenrelativbewegung mittels des Sensors zu bestimmen. Ein solcher Funktionstest vor der Kalibrierung und/oder vor dem Betrieb ist nicht möglich, wenn ein Dehnmessstreifen direkt auf die Welle aufgebracht wird.

Es ist bevorzugt, dass der Sensor der Bewegungsmessvorrichtung eingerichtet ist eine Längenveränderung der Hülse zu bestimmen, insbesondere weist der Sensor einen Dehnmessstreifen und/oder eine optische Faser auf. Der Dehnmessstreifen ist beispielhaft eingerichtet die Längenänderung, die durch eine Torsion der Hülse verursacht ist, zu messen. Der Sensor kann beispielhaft zum Bestimmen der Längenänderung der Hülse auch die optische Faser, insbesondere einen Bragg Sensor, aufweisen.

Bevorzugt weist die Hülse der Bewegungsmessvorrichtung ein erstes Hülsenelement und ein zweites Hülsenelement, die fest miteinander verbunden sind, auf, wobei das zweite Hülsenelement eingerichtet ist mit der Welle in der zweiten Hülsenebene in dem Betrieb fest verbunden zu sein, eine kürzere axiale Erstreckung als ein Axialabstand von der ersten Hülsenebene zu der zweiten Hülsenebene hat und eine größere Verformung bei einer gleichen Krafteinwirkung als das erste Hülsenelement hat, das eingerichtet ist mit der Welle in der ersten Hülsenebene in dem Betrieb fest verbunden zu sein, wodurch die Hülsenrelativbewegung mittels der Messung einer Verformung des zweiten Hülsenelements von dem Sensor bestimmbar ist. Dadurch, dass das zweite Hülsenelement bei der gleichen Krafteinwirkung die größere Verformung als das erste Hülsenelement hat, konzentriert sich die Verformung der Hülse auf das zweite Hülsenelement und die Verformung des zweiten Hülsenelements entspricht der Verformung der Welle zwischen der ersten Hülsenebene und der zweiten Hülsenebene. Somit ist für eine genaue Bestimmung der Hülsenrelativbewegung nur die Messung des zweiten Hülsenelements erforderlich. Dadurch, dass sich die Verformung in dem zweiten Hülsenelement konzentriert und durch die kürzere axiale Erstreckung des zweiten Hülsenelements als der Axialabstand der beiden Hülsenebenen ist ein Messsignal des Sensors höher als wenn die Verformung unmittelbar auf der Welle bestimmt werden würde, wodurch die Genauigkeit der Bestimmung der Hülsenrelativbewegung weiter erhöht wird. Die axiale Erstreckung des zweiten Hülsenelements ist beispielsweise maximal ein Fünftel, insbesondere maximal ein Zehntel, insbesondere maximal ein Fünfzigstel des Axialabstands von der ersten Hülsenebene zu der zweiten Hülsenebene.

Außerdem wird durch eine Aufteilung der Hülse in das erste Hülsenelement und in das zweite Hülsenelement eine flexible Anordnung des Sensors ermöglicht, was beispielsweise interessant für die Anordnung eines Empfängers von den Messsignalen des Sensors ist. Durch ein Tauschen der ersten und der zweiten Hülsenebene kann die Position des Sensors zusammen mit der Position des Empfängers geändert werden.

Bevorzugt weist die Hülse der Bewegungsmessvorrichtung ein erstes Hülsenelement, ein zweites Hülsenelement und ein drittes Hülsenelement auf, wobei das erste Hülsenelement eingerichtet ist mit der Welle in der ersten Hülsenebene in dem Betrieb fest verbunden zu sein und im Wesentlichen die gleiche Verformung bei einer gleichen Krafteinwirkung wie das zweite Hülsenelement hat, das eingerichtet ist mit der Welle in der zweiten Hülsenebene in dem Betrieb fest verbunden zu sein, wobei das dritte Hülsenelement, das zwischen dem ersten Hülsenelement und dem zweiten Hülsenelement angeordnet ist und mit dem ersten Hülsenelement und dem zweiten Hülsenelement fest verbunden ist, eine kürzere axiale Erstreckung als ein Axialabstand von der ersten Hülsenebene zu der zweiten Hülsenebene hat und eine größere Verformung bei der gleichen Krafteinwirkung als das erste Hülsenelement und das zweite Hülsenelement hat, wodurch die Hülsenrelativbewegung mittels der Messung einer Verformung des dritten Hülsenelements von dem Sensor bestimmbar ist. Dadurch, dass die Hülse in das erste Hülsenelement, in das zweite Hülsenelement und in das dritte Hülsenelement, wobei das erste Hülsenelement die im Wesentlichen gleiche Verformung bei gleicher Krafteinwirkung wie das zweite Hülsenelement hat, geteilt ist, konzentriert sich die Verformung auf das dritte Hülsenelement, was die größere Verformung bei gleicher Krafteinwirkung hat und die Verformung der Welle zwischen der ersten Hülsenebene und der zweiten Hülsenebene entspricht der Verformung des dritten Hülsenelements. Somit ist für eine genaue Bestimmung der Hülsenrelativbewegung nur die Messung der Relativbewegung des dritten Hülsenelements erforderlich. Dadurch, dass sich die Verformung in dem dritten Hülsenelement konzentriert und durch die kürzere axiale Erstreckung des dritten Hülsenelements als der Axialabstand der beiden Hülsenebenen ist ein Messsignal des Sensors höher als wenn die Verformung unmittelbar auf der Welle bestimmt werden würde, wodurch die Genauigkeit der Bestimmung der Hülsenrelativbewegung weiter erhöht wird. Die axiale Erstreckung des dritten Hülsenelements ist beispielsweise maximal ein Fünftel, insbesondere maximal ein Zehntel, insbesondere maximal ein Fünfzigstel des Axialabstands von der ersten Hülsenebene zu der zweiten Hülsenebene. Außerdem lässt sich durch die dreigeteilte Hülse eine flexible Anordnung des dritten Hülsenelements und des Sensors zwischen der ersten Hülsenebene und der zweiten Hülsenebene einfach gestalten, was beispielsweise interessant für die Anordnung eines Empfängers von den Messsignalen des Sensors ist.

Bevorzugt hat jenes der Hülsenelemente, das bei der gleichen Krafteinwirkung die größere Verformung als die anderen der Hülsenelemente hat, die um mindestens zehn Mal größere Verformung bei der gleichen Krafteinwirkung. Dadurch, dass eines der Hülsenelemente die um zehn Mal größere Verformung hat als ein anderes der Hülsenelemente, ist bei der Messung die Verformung jenes Hülsenelements mit der geringeren Verformung bei gleicher Krafteinwirkung vernachlässigbar, was sich vorteilhaft hinsichtlich der genaueren Bestimmung der Hülsenrelativbewegung auswirkt.

Bevorzugt weist die Hülse der Bewegungsmessvorrichtung ein erstes Hülsenelement und ein zweites Hülsenelement auf, wobei das erste Hülsenelement eingerichtet ist mit der Welle in der ersten Hülsenebene in dem Betrieb fest verbunden zu sein und das zweite Hülsenelement eingerichtet ist mit der Welle in der zweiten Hülsenebene in dem Betrieb fest verbunden zu sein, und zwischen den beiden Hülsenelementen ein Spalt derart angeordnet ist, dass die beiden Hülsenelemente frei zueinander bewegbar sind und der Spalt eine kürzere axiale Erstreckung als ein Axialabstand von der ersten Hülsenebene zu der zweiten Hülsenebene hat, wodurch die Hülsenrelativbewegung durch die Messung der Relativbewegung des ersten Hülsenelements zu dem zweiten Hülsenelements von dem Sensor bestimmbar ist. Dadurch, dass die Hülse in das erste Hülsenelement und in das zweite Hülsenelement geteilt ist, wird die Relativbewegung des ersten Hülsenelements zu dem zweiten Hülsenelement mittels einer Messung einer in einer Umfangsrichtung stattfindenden Bewegung des ersten Hülsenelements zu dem zweiten Hülsenelement möglich. Die Relativbewegung konzentriert sich in dem Spalt, wodurch ein Messsignal des Sensors höher ist als wenn die Verformung unmittelbar auf der Welle bestimmt werden würde. Dadurch, dass sich die Verformung in dem Spalt konzentriert und durch die kürzere axiale Erstreckung des Spalts als der Axialabstand der beiden Hülsenebenen ist ein Messsignal des Sensors noch weiter erhöht, wodurch die Genauigkeit der Bestimmung der Hülsenrelativbewegung weiter erhöht wird. Die axiale Erstreckung des Spalts ist beispielsweise maximal ein Fünftel, insbesondere maximal ein Zehntel, insbesondere maximal ein Fünfzigstel des Axialabstands von der ersten Hülsenebene zu der zweiten Hülsenebene. Beispielhaft kann der Sensor eine Strahlungsquelle, die eingerichtet ist eine elektromagnetische Strahlung zu emittieren, an dem ersten Hülsenelement und eine Strahlungsmessvorrichtung, die eingerichtet ist, die Strahlung zu messen, an dem zweiten Hülsenelement aufweisen. Die Strahlungsquelle und die Strahlungsmessvorrichtung können derart aufeinander abgestimmt sein, dass, wenn die beiden Hülsenelemente sich gegeneinander bewegen, sich die Menge an von der Strahlungsmessvorrichtung detektierter Strahlung ändert. Aus dieser Änderung kann dann auf die Hülsenrelativbewegung zurückgeschlossen werden.

Bevorzugt sind die verschiedenen Hülsenelemente in einer radialen Richtung bezogen auf die Hülsenrotationsachse oder in der Axialrichtung nebeneinander angeordnet.

Bevorzugtermaßen ist der Sensor eingerichtet eine Winkelveränderung zwischen zwei der Hülsenelemente und/oder eine Längenveränderung desjenigen der Hülsenelemente, das die größere Verformung bei gleicher Krafteinwirkung hat, zu bestimmen, insbesondere weist der Sensor einen Dehnmesstreifen auf, der auf jenes der Hülsenelemente, das die größere Verformung bei gleicher Krafteinwirkung hat, aufgebracht ist. Dadurch, dass der Sensor einen der Dehnmessstreifen aufweist, ist beispielhaft die Längenveränderung jenes der Hülsenelemente, das die größere Verformung bei gleicher Krafteinwirkung hat, aufgrund einer Torsion der Welle bestimmbar, woraus das an der Welle anliegende Torsionsmoment bestimmbar ist.

Bevorzugt ist die Wellenrelativbewegung eine Torsion der Welle. Die Torsion tritt dann auf, wenn die Welle mit einem Hebel senkrecht zu einer Wellenrotationsachse beansprucht ist.

Die erfindungsgemäße Maschine weist eine der Bewegungsmessvorrichtungen und die Welle auf, die in der ersten Hülsenebene und in der zweiten Hülsenebene fest mit der Hülse verbunden ist. Dabei ist bevorzugt, dass die Hülse in einem Bereich zwischen der ersten Hülsenebene und der zweiten Hülsenebene von der Welle beabstandet angeordnet ist. Insbesondere ist die Hülse in dem Bereich entlang des vollständigen Umfangs von der Welle beabstandet angeordnet. Die Maschine kann beispielsweise eine Turbine oder ein Generator sein, deren das an ihrer Welle anliegende Drehmoment bestimmt werden soll.

Beispielhaft können entlang der Welle unterschiedliche Teilbereiche mittels mehrerer der Bewegungsmessvorrichtungen überwacht werden. Eine Turbinenwelle eines Kraftwerks weist beispielsweise einen Hochdruckabschnitt und einen Niederdruckabschnitt auf, die beide einen bestimmten Anteil an dem gesamten Drehmoment der Welle haben. Um den jeweiligen Anteil des Hochdruckabschnitts und des Niederdruckabschnitts an dem gesamten Drehmoment der Welle zu bestimmen, kann eine der Bewegungsmessvorrichtungen an dem Hochdruckabschnitt und eine der Bewegungsmessvorrichtungen an dem Niederdruckabschnitt angebracht werden. Ist die Welle beispielhaft in weitere Abschnitte unterteilt, können die jeweiligen Anteile an dem gesamten Drehmoment durch weitere Bewegungsmessvorrichtungen bestimmt werden.

Bevorzugtermaßen ist die Wellenrotationsachse der Welle im Wesentlichen koaxial mit der Hülsenrotationsachse angeordnet. Dadurch, dass die Wellenrotationsache der Welle im Wesentlichen koaxial mit der Hülsenrotationsachse angeordnet ist, wird einer Unwucht entgegengewirkt. Die Unwucht kann die Genauigkeit der Bestimmung der Hülsenrelativbewegung verringern.

Es ist bevorzugt, dass in der Maschine die Bewegungsmessvorrichtung radial außen an der Welle angeordnet ist oder die Welle in ihrem Inneren einen insbesondere rotationssymmetrischen Hohlraum aufweist, in dem die Bewegungsmessvorrichtung angeordnet ist. Dadurch, dass die Bewegungsmessvorrichtung radial außen an der Welle angeordnet wird, ist die Bewegungsmessvorrichtung einfach zugänglich, was vorteilhaft für eventuelle Wartungsprozesse ist. Ist die Bewegungsmessvorrichtung in dem insbesondere rotationssymmetrischen Hohlraum angeordnet, ist die Bewegungsmessvorrichtung vor einer Verschmutzung oder einer Verunreinigung noch besser geschützt. Dies wirkt einer Verfälschung der Messung entgegen und erhöht dadurch die Genauigkeit der Bestimmung der Hülsenrelativbewegung. Wird die Bewegungsmessvorrichtung in dem insbesondere rotationssymmetrischen Hohlraum angeordnet und ist der Sensor an der Hülse an einer der Hülsenrotationsachse zugewandten Fläche angeordnet, sorgt eine auf den Sensor wirkende Fliehkraft in dem Betrieb für ein vorteilhaftes festes Anliegen des Sensors an der Hülse.

Das erfindungsgemäße Verfahren zum Kalibrieren einer Bewegungsmessvorrichtung weist folgende Schritte auf: a) Bereitstellen der Bewegungsmessvorrichtung; b) Bereitstellen einer Kalibrierwelle, die zumindest eine Teilnachbildung der Welle ist; c) Festes Verbinden der Bewegungsmessvorrichtung mit der Kalibrierwelle in der ersten Hülsenebene und in der zweiten Hülsenebene an einer Kalibrierwellenposition; d) Aufbringen eines für eine Kalibrierung benötigten vorherbestimmten Drehmoments auf die Kalibrierwelle und damit zeitgleiches Aufnehmen einer Messgröße mit dem Sensor an der Kalibrierwelle; e) Erstellen einer Kalibrierfunktion unter Heranziehen der mit dem Sensor aufgenommenen Messgröße und des auf die Kalibrierwelle aufgebrachten vorherbestimmten Drehmoments; f) Lösen der Bewegungsmessvorrichtung von der Kalibrierwelle; g) Festes Verbinden der Bewegungsmessvorrichtung mit der Welle in der ersten Hülsenebene und in der zweiten Hülsenebene an einer vorherbestimmten Wellenposition der Welle, wobei die Wellenposition der Kalibrierwellenposition entspricht. Dadurch, dass die Bewegungsmessvorrichtung mit der Hülse und dem Sensor vorgesehen ist, muss die Kalibrierung des Sensors nicht an der Welle vorgenommen werden, sondern die Kalibrierung des Sensors kann von der Welle getrennt und beispielsweise unter Laborbedingungen durchgeführt werden. Dadurch, dass die Kalibrierung nicht mehr direkt an der Welle erfolgt, reduziert sich der Aufwand für die Kalibrierung der Bewegungsmessvorrichtung. Auch ist es möglich die Kalibrierung öfter durchzuführen, wodurch die Genauigkeit der Bestimmung der Hülsenrelativbewegung weiter erhöht werden kann. Außerdem ist es möglich unter den Laborbedingungen viele Bewegungsmessvorrichtungen in einer kurzen Zeit zu kalibrieren und diese anschließend zu den jeweiligen Wellen zu transportieren und dann die bereits kalibrierte Bewegungsmessvorrichtung mit der Welle fest zu verbinden. Die unter den Laborbedingungen kalibrierten Bewegungsmessvorrichtungen sind genauer kalibriert, was die genaue Bestimmung der Hülsenrelativbewegung weiter erhöht.

Es ist ebenso möglich, dass im Schritt d) die Kalibrierwelle auf die Temperatur erwärmt ist, die auch im Betrieb der Welle auftritt. Dadurch kann die Genauigkeit der Bestimmung der Wellenrelativbewegung weiter gesteigert werden. Dabei ist es besonders vorteilhaft, die Wellenposition im Bereich eines Lagers der Welle zu wählen, weil hier im Betrieb definierte Temperaturen auftreten.

Bevorzugt weist das Verfahren folgende zusätzliche Schritte auf: a1) Verdrillen der Hülse mit einem für eine Vorkalibrierung benötigten vorherbestimmten Drehwinkel und zeitgleiches Aufnehmen einer Vorkalibriermessgröße mit dem Sensor; a2) Erstellen einer Vorkalibrierfunktion unter Heranziehen der mit dem Sensor aufgenommenen Vorkalibriermessgröße und des vorherbestimmten Drehwinkels; wobei in Schritt e) die Kalibrierfunktion zusätzlich unter Heranziehen der Vorkalibrierfunktion erstellt wird. Für das Verdrillen der Hülse der Bewegungsmessvorrichtung kann die Hülse beispielhaft an der ersten Hülsenebene eingespannt werden und an der zweiten Hülsenebene wird der benötigte vorherbestimmte Verdrehwinkel aufgebracht. Die Vorkalibrierfunktion kann anschließend unter Heranziehen der Vorkalibriermessgröße und des Verdrehwinkels erstellt werden. In Schritt e) fließt die Vorkalibrierfunktion in die Kalibrierfunktion mit ein. Ist bei Bewegungsmessvorrichtungen für baugleiche Wellen die Kalibrierfunktion identisch, kann das Erstellen der Vorkalibrierfunktion ausreichend sein, um die Bewegungsmessvorrichtung vollständig zu kalibrieren, da die bereits bekannte Kalibrierfunktion für weitere Bewegungsmessvorrichtungen für die baugleichen Wellen herangezogen werden kann. Dies ist jedoch nur dann möglich insofern eine erste Bewegungsmessvorrichtung das Kalibrierverfahren vollständig durchlaufen hat und die Kalibrierfunktion der ersten Bewegungsmessvorrichtungen für folgende weitere Bewegungsmessvorrichtungen für baugleiche Wellen herangezogen werden kann. Dadurch, dass die Kalibrierfunktion für die folgenden weiteren Bewegungsmessvorrichtungen herangezogen werden kann, reduziert sich der Aufwand zum Kalibrieren von den mehreren Bewegungsmessvorrichtungen für die baugleichen Wellen.

Bevorzugtermaßen ist die Kalibrierwelle lediglich die Teilnachbildung der Welle. Für die Kalibrierung der Bewegungsmessvorrichtung ist lediglich jener Abschnitt der Welle notwendig, mit dem die Bewegungsmessvorrichtung fest verbunden ist, deshalb ist für die Kalibrierwelle dieser Abschnitt der Welle ausreichend. Dadurch, dass die Teilnachbildung der Welle für die Kalibrierung ausreichend ist, wird das Verfahren kostengünstiger und platzsparender, ohne die genaue Bestimmung der Hülsenrelativbewegung negativ zu beeinflussen.

Bevorzugt weist das Verfahren folgende zusätzliche Schritte auf: h) Aufnehmen mindestens einer weiteren Messgröße mit dem Sensor an der Welle; und: i) Bestimmen eines an der Welle anliegenden Drehmoments unter Heranziehen der weiteren Messgröße und der Kalibrierfunktion.

Im Folgenden werden bevorzugte Ausführungsformen einer erfindungsgemäßen Bewegungsmessvorrichtung anhand schematischer Zeichnungen dargestellt.
Figur 1 zeigt eine schematische Darstellung eines Längsschnitts durch eine Maschine mit einer ersten Ausführungsform der Bewegungsmessvorrichtung.
Figur 2 zeigt eine schematische Darstellung eines Längsschnitts durch eine Maschine mit einer zweiten Ausführungsform der Bewegungsmessvorrichtung.
Figur 3 zeigt eine schematische Darstellung eines Längsschnitts durch eine Maschine mit einer dritten Ausführungsform der Bewegungsmessvorrichtung.
Figur 4 zeigt eine schematische Darstellung eines Längsschnitts durch eine Maschine mit einer vierten Ausführungsform der Bewegungsmessvorrichtung.
Figur 5 zeigt eine schematische Darstellung eines Längsschnitts durch eine Maschine mit einer fünften Ausführungsform der Bewegungsmessvorrichtung.

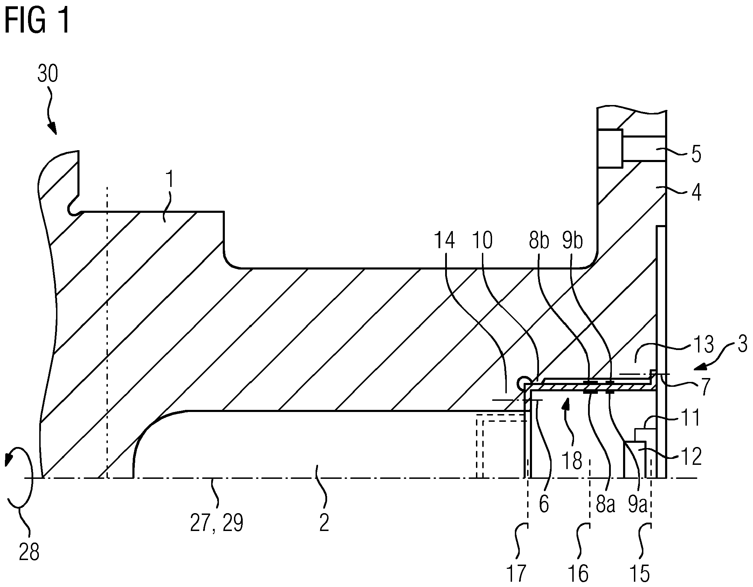

Wie es aus Figuren 1 bis 5 ersichtlich ist, weist eine Maschine 30 eine Welle 1 und eine Bewegungsmessvorrichtung 3 auf. Bei der Maschine 30 kann es sich beispielsweise um eine Strömungsmaschine und/oder einen elektrischen Generator handeln. Die Bewegungsmessvorrichtung 3 ist eingerichtet eine Bewegungsmessung einer Wellenrelativbewegung der Welle 1 durchzuführen. Bei der Wellenrelativbewegung kann es sich beispielsweise um eine Torsion der Welle 1 handeln.

Die Bewegungsmessvorrichtung 3 weist eine Hülse 18 und einen Sensor 8 auf. Die Hülse 18 weist eine Hülsenrotationsachse 27 und die Welle 1 weist eine Wellenrotationsachse 29 auf, die im Wesentlichen koaxial mit der Hülsenrotationsachse 27 angeordnet ist, um die die Maschine 30 in ihrem Betrieb rotierbar ist. Die Rotation der Maschine 30 ist durch einen Pfeil 28 angedeutet. Die Hülse 18 ist mit der Welle 1 in einer ersten Hülsenebene 15 und in einer zweiten Hülsenebene 17 fest verbunden. Die beiden Hülsenebenen 15, 17 sind rechtwinklig zu der Hülsenrotationsachse 27 und in einer Axialrichtung bezogen auf die Hülsenrotationsachse 27 zueinander beabstandet angeordnet. Dadurch, dass, die Hülse 18 mit der Welle 1 fest verbunden ist, entspricht die Wellenrelativbewegung der Welle 1 von der ersten Hülsenebene 15 zu der zweiten Hülsenebene 17 im Wesentlichen der Hülsenrelativbewegung. Der Sensor 8 ist eingerichtet mindestens eine Hülsenrelativbewegung der Hülse 18 von der ersten Hülsenebene 15 zu der zweiten Hülsenebene 17 zu messen, wodurch die Wellenrelativbewegung bestimmbar ist.

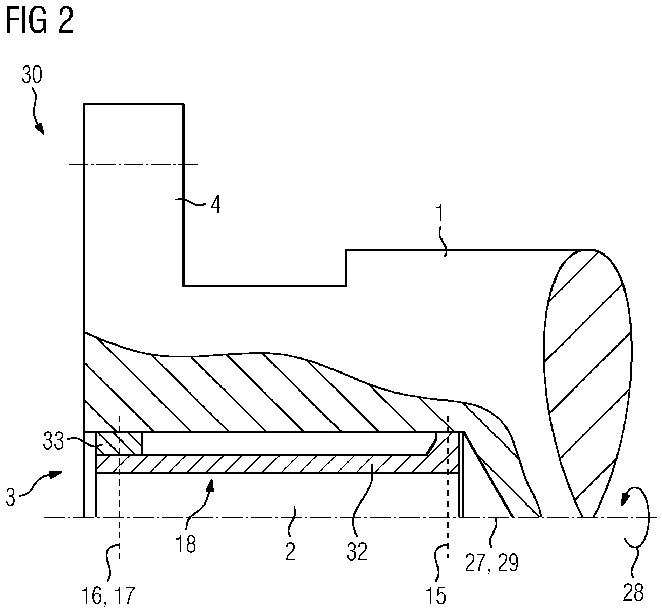

Zum festen Verbinden der Hülse 18 weist die Welle 1, wie für die erste Ausführungsform in Figur 1 gezeigt, einen ersten Hülsenbefestigungsflansch 13, der in der ersten Hülsenebene 15 angeordnet ist, und einen zweiten Hülsenbefestigungsflansch 14 auf, der in der zweiten Hülsenebene 17 angeordnet ist. Die Hülse 18 ist an den beiden Hülsenbefestigungsflanschen 13, 14 angeflanscht, mittels einer ersten Hülsenbefestigung 6 an dem ersten Hülsenbefestigungsflansch 13 und mittels einer zweiten Hülsenbefestigung 7 an dem zweiten Hülsenbefestigungsflansch 14 befestigt. Bei den Hülsenbefestigungen 6, 7 kann es sich beispielsweise um Schraubverbindungen handeln, die insbesondere in der Axialrichtung orientiert sind. Die anderen Ausführungsformen der Figuren 2 bis 5 können ebenfalls die Hülsenbefestigungsflansche 13, 14 und die Hülsenbefestigungen 6, 7 aufweisen.

Figuren 1 bis 5 zeigen, dass die Hülse 18 in einem Bereich zwischen der ersten Hülsenebene 15 und der zweiten Hülsenebene 17 entlang des vollständigen Umfangs beabstandet von der Welle 1 angeordnet ist. Dazu können die Welle 1 und die Hülse 18 mindestens einen Vorsprung aufweisen. Für die erste Ausführungsform ist jedoch denkbar, dass die Hülse 18 entlang ihrer vollständigen Axialerstreckung und Umfangserstreckung an der Welle 1 anliegt. Die Maschine 30 kann eine Zentriervorrichtung 10 aufweisen, mittels der die Hülsenrotationsachse 27 und die Wellenrotationsachse 29 koaxial zueinander angeordnet werden können, was einer Unwucht im Betrieb der Maschine 30 entgegenwirkt, was sich vorteilhaft hinsichtlich der genauen Bestimmung der Hülsenrelativbewegung auswirkt. Die Zentriervorrichtung 10 kann, wie beispielsweise in Figur 1 dargestellt, von dem Vorsprung gebildet sein.

Figuren 1 bis 5 zeigen weiterhin, dass die Welle 1 in ihrem Inneren einen um die Wellenrotationsachse 29 rotationssymmetrischen Hohlraum 2 aufweist. Die Bewegungsmessvorrichtung 3 ist in dem Hohlraum 2 angeordnet. Alternativ ist denkbar, dass die Bewegungsmessvorrichtung 3 radial außen an der Welle 1 angeordnet ist. In diesem Fall ist es nicht erforderlich den Hohlraum 2 vorzusehen.

Wie es aus Figuren 1 bis 5 ersichtlich ist, kann die Welle 1 einen Wellenflansch 4 aufweisen, mittels dem die Welle 1 mit einer weiteren Komponente der Maschine 30, insbesondere einer weiteren Welle, verbindbar ist. Die Verbindung kann, wie in Figur 1 dargestellt, mittels einer Wellenflanschaussparung 5 vorgenommen werden.

Gemäß der ersten Ausführungsform ist der Sensor 8 eingerichtet, eine Längenveränderung der Hülse 18 zu bestimmen. Die Längenveränderung kann beispielsweise von einer Torsion der Welle 1 und damit von einer Torsion der Hülse 18 resultieren. Dazu kann der Sensor 8 einen Dehnmessstreifen aufweisen, der auf die Hülse 18 aufgebracht ist. Figur 1 zeigt, dass der Sensor 8 ein innenseitig angeordneter Sensor 8a, der auf der der Hülsenrotationsachse 27 zugewandten Oberfläche der Hülse 18 aufgebracht ist, und/oder ein außenseitig angeordneter Sensor 8b sein kann, der auf der der Hülsenrotationsachse 27 abgewandten Oberfläche der Hülse 18 aufgebracht ist. Der Sensor 8 ist in einer Messebene 16 angeordnet, die zwischen der ersten Hülsenebene 15 und der zweiten Hülsenebene 17 und von diesen beabstandet angeordnet ist.

Gemäß der ersten Ausführungsform weist die Bewegungsmessvorrichtung 3 zusätzlich einen Temperatursensor 9 auf, der eingerichtet ist die Temperatur der Hülse 18 zu bestimmen. Der Temperatursensor 9 ist beispielhaft ein innenseitig angeordneter Temperatursensor 9a, der auf der der Hülsenrotationsachse 27 zugewandten Oberfläche der Hülse 18 aufgebracht ist, oder ein außenseitig angeordneter Temperatursensor 9b, der auf der der Hülsenrotationsachse 27 abgewandten Oberfläche der Hülse 18 aufgebracht ist. Der Temperatursensor 9 ist besonders vorteilhaft, wenn der Sensor 8 eingerichtet ist eine Längenveränderung der Hülse 18 zu bestimmen. In diesem Fall kann die Temperatur dazu herangezogen werden, zu differenzieren, welcher Anteil der von dem Sensor 8 bestimmten Längenveränderung von einer Temperaturänderung der Hülse 18 resultiert. Außerdem kann die Temperatur herangezogen werden, um festzustellen ob die Bewegungsmessvorrichtung eine geforderte Betriebstemperatur hat. Auch die übrigen Ausführungsformen können den Temperatursensor 9 aufweisen.

Figur 1 zeigt, dass die Bewegungsmessvorrichtung 3 gemäß der ersten Ausführungsform eine Auswerteeinheit 12 und eine Antenne 11 aufweist. Mittels einer Telemetrie der Bewegungsmessvorrichtung 3 sind die von der Auswerteeinheit 12 verarbeiteten Messsignale des Sensors 8 und/oder des Temperatursensors 9 via die Antenne 11 an einen externen Empfänger übertragbar. Auch die übrigen Ausführungsformen können die Auswerteeinheit 12 die Antenne 11 und die Telemetrie aufweisen.

Wie es aus Figur 2 ersichtlich ist, weist gemäß der zweiten Ausführungsform die Hülse 18 ein erstes Hülsenelement 32 und ein zweites Hülsenelement 33 auf, die fest miteinander verbunden sind. Das erste Hülsenelement 32 ist in der ersten Hülsenebene 15 mit der Welle 1 fest verbunden und das zweite Hülsenelement 33 ist in der zweiten Hülsenebene 17 mit der Welle 1 fest verbunden. Das zweite Hülsenelement 33 hat eine kürzere axiale Erstreckung als ein Axialabstand von der ersten Hülsenebene 15 zu der zweiten Hülsenebene 17, außerdem hat das zweite Hülsenelement 33 eine größere Verformung bei einer gleichen Krafteinwirkung als das erste Hülsenelement 32. Dadurch ist die Hülsenrelativbewegung mittels der Messung der Verformung des zweiten Hülsenelements 33 von dem Sensor 8 bestimmbar. Die Figur 2 zeigt, dass das erste Hülsenelement 32 zu dem zweiten Hülsenelement 33 derart angeordnet ist, dass die Messebene 16 mit der zweiten Hülsenebene 17 zusammenfällt. Eine andere Anordnung der beiden Hülsenelemente 32, 33 ist denkbar, sodass die Messebene 16 nicht mehr mit einer der beiden Hülsenebenen 15, 17 zusammenfällt. Die beiden Hülsenelemente 32, 33 können beispielhaft in einer radialen Richtung bezogen auf die Hülsenrotationsachse 27 oder in der Axialrichtung nebeneinander angeordnet sein. Der Sensor 8 der Bewegungsmessvorrichtung 3 gemäß der zweiten Ausführungsform ist dazu eingerichtet eine Längenveränderung des zweiten Hülsenelements 33, das die größere Verformung bei der gleichen Krafteinwirkung hat, zu messen. Insbesondere kann der Sensor 8 ein Dehnmessstreifen sein, der beispielhaft an eine parallel zu der zweiten Hülsenebene 17 angeordneten Fläche des zweiten Hülsenelements 33 angeordnet ist.

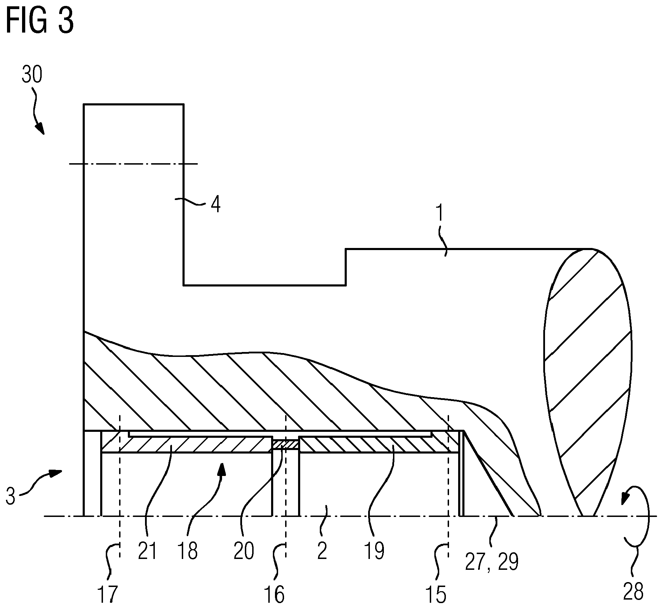

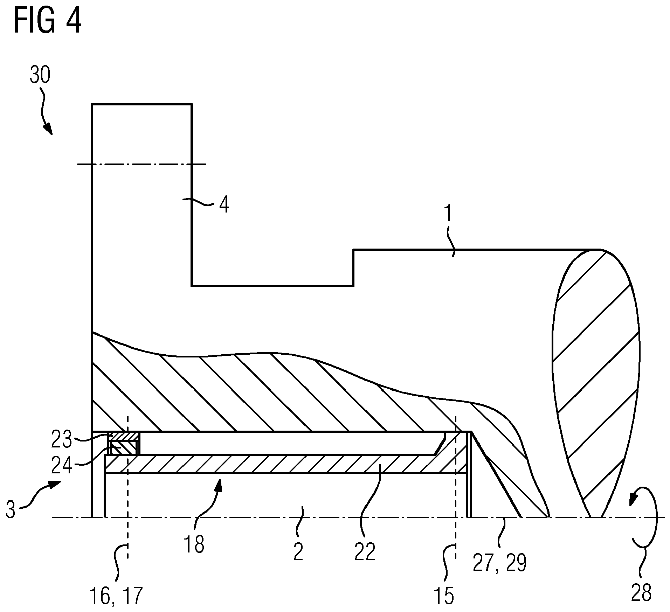

Wie es aus Figur 3 und Figur 4 ersichtlich ist, weißt gemäß der dritten und vierten Ausführungsform die Hülse 18 ein erstes Hülsenelement 19, 22, ein zweites Hülsenelement 21, 23 und ein drittes Hülsenelement 20, 24 auf. Das erste Hülsenelement 19, 22 ist mit der Welle 1 in der ersten Hülsenebene 15 fest verbunden und hat im Wesentlichen die gleiche Verformung bei der gleichen Krafteinwirkung wie das zweite Hülsenelement 21, 23, das mit der Welle 1 in der zweiten Hülsenebene 17 fest verbunden ist. Das dritte Hülsenelement 20, 24 ist zwischen dem ersten Hülsenelement 19, 22 und dem zweiten Hülsenelement 21, 23 angeordnet und mit diesen fest verbunden. Das dritte Hülsenelement 20, 24 hat die kürzere axiale Erstreckung als der Axialabstand von der ersten Hülsenebene 17 zu der zweiten Hülsenebene 19 und die größere Verformung bei der gleichen Krafteinwirkung als das erste Hülsenelement 19, 22 und das zweite Hülsenelement 21, 23. Dadurch ist die Hülsenrelativbewegung mittels der Messung der Verformung des dritten Hülsenelements 20, 24 von dem Sensor 8 bestimmbar.

Die Figur 3 zeigt die dritte Ausführungsform der Maschine 30, dabei ist die Messebene 16 zwischen der ersten Hülsenebene 15 und der zweiten Hülsenebene 17 angeordnet. Das dritte Hülsenelement 20 ist in Figur 3 in der Axialrichtung bezogen auf die Hülsenrotationsachse 27 neben dem ersten Hülsenelement 19 und dem zweiten Hülsenelement 21 angeordnet. Der Sensor 8 der Bewegungsmessvorrichtung 3 gemäß der dritten Ausführungsform ist dazu eingerichtet eine Längenveränderung des dritten Hülsenelements 20, das die größere Verformung bei der gleichen Krafteinwirkung hat, zu messen. Insbesondere kann der Sensor 8 ein Dehnmessstreifen sein, der beispielhaft an einer der Hülsenrotationsachse 27 abgewandten Oberfläche des dritten Hülsenelements 20 oder an einer der Hülsenrotationsachse 27 zugewandten Oberfläche des dritten Hülsenelements 20 angeordnet ist.

Die Figur 4 zeigt die vierte Ausführungsform der Maschine 30, dabei fällt die Messebene 16 mit der zweiten Hülsenebene 17 zusammen. Das dritte Hülsenelement 24 ist in Figur 4 in der radialen Richtung bezogen auf die Hülsenrotationsachse 27 neben dem ersten Hülsenelement 22 und dem zweiten Hülsenelement 23 angeordnet. Der Sensor 8 der Bewegungsmessvorrichtung 3 gemäß der vierten Ausführungsform ist dazu eingerichtet eine Längenveränderung des dritten Hülsenelements 24, das die größere Verformung bei der gleichen Krafteinwirkung hat, zu messen. Insbesondere kann der Sensor 8 ein Dehnmessstreifen sein, der beispielhaft an einer Oberfläche des dritten Hülsenelements 24 angeordnet ist, die der ersten Hülsenebene 15 zugewandt ist oder die der ersten Hülsenebene 15 abgewandt ist.

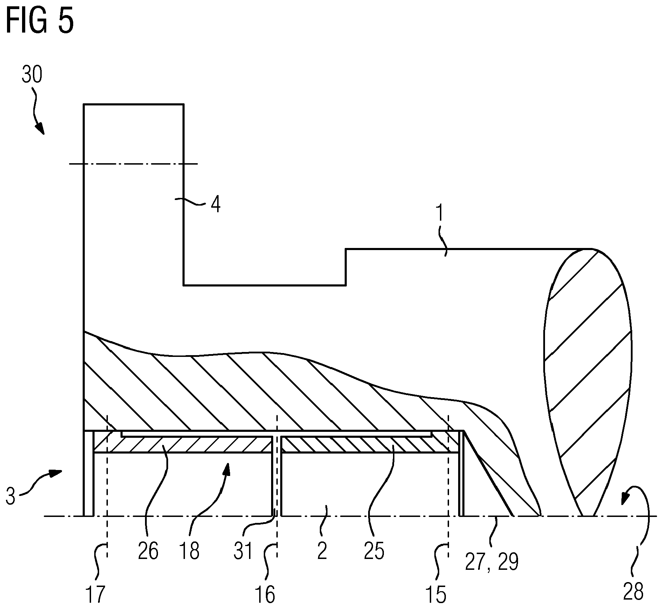

Wie es aus Figur 5 ersichtlich ist, weißt gemäß der fünften Ausführungsform die Hülse 18 ein erstes Hülsenelement 25 und ein zweites Hülsenelement 26 auf. Das erste Hülsenelement 25 ist mit der Welle 1 in der ersten Hülsenebene 15 fest verbunden und das zweite Hülsenelement 26 ist in der zweiten Hülsenebene 17 fest verbunden. Zwischen den beiden Hülsenelementen 25, 26 ist ein Spalt 31 derart angeordnet, dass die beiden Hülsenelemente 25, 26 frei zueinander bewegbar sind. Der Spalt 31 hat die kürzere axiale Erstreckung als der Axialabstand von der ersten Hülsenebene 15 zu der zweiten Hülsenebene 17. Dadurch ist die Hülsenrelativbewegung durch die Messung der Relativbewegung des ersten Hülsenelements 25 zu dem zweiten Hülsenelement 26 von dem Sensor 8 bestimmbar. Die beiden Hülsenelemente 25, 26 können beispielsweise in der radialen Richtung bezogen auf die Hülsenrotationsachse 27 oder in der Axialrichtung nebeneinander angeordnet sein. Der Sensor 8 der Bewegungsmessvorrichtung 3 gemäß der fünften Ausführungsform ist dazu eingerichtet eine Winkelveränderung zwischen dem ersten Hülsenelement 25 und dem zweiten Hülsenelement 26 zu messen. Beispielhaft kann der Sensor 8 eine Strahlungsquelle, die eingerichtet ist eine elektromagnetische Strahlung zu emittieren, an dem ersten Hülsenelement 25 und eine Strahlungsmessvorrichtung, die eingerichtet ist, die Strahlung zu messen, an dem zweiten Hülsenelement 26 aufweisen. Die Strahlungsquelle und die Strahlungsmessvorrichtung können derart aufeinander abgestimmt sein, dass, wenn die beiden Hülsenelemente 25, 26 sich gegeneinander bewegen, sich die Menge an von der Strahlungsmessvorrichtung detektierter Strahlung ändert. Aus dieser Änderung kann dann auf die Hülsenrelativbewegung zurückgeschlossen werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Bewegungsmessvorrichtung (3) für eine Bewegungsmessung einer Wellenrelativbewegung einer Welle (1), mit einer Hülse (18), die eingerichtet ist mit der Welle (1) in einer ersten Hülsenebene (15), die rechtwinklig zu einer Hülsenrotationsachse (27) der Hülse (18) liegt, und in einer zweiten Hülsenebene (17), die von der ersten Hülsenebene (15) in einer Axialrichtung bezogen auf die Hülsenrotationsachse (27) beabstandet ist, in einem Betrieb der Bewegungsmessvorrichtung (3) fest verbunden zu sein, und einem Sensor (8), der eingerichtet ist mindestens eine Hülsenrelativbewegung der Hülse (18) von der ersten Hülsenebene (15) zu der zweiten Hülsenebene (17) zu messen,
wobei dadurch, dass,
wenn die Hülse (18) in dem Betrieb mit der Welle (1) fest verbunden ist, die Wellenrelativbewegung der Welle (1) von der ersten Hülsenebene (15) zu der zweiten Hülsenebene (17) der Hülsenrelativbewegung im Wesentlichen entspricht, wodurch die Wellenrelativbewegung mittels einer Messung der Hülsenrelativbewegung von dem Sensor (8) bestimmbar ist.

2. Bewegungsmessvorrichtung (3) gemäß Anspruch 1,
wobei der Sensor (8) eingerichtet ist eine Längenveränderung der Hülse (18) zu bestimmen, insbesondere weist der Sensor (8) einen Dehnmessstreifen und/oder eine optische Faser auf.

3. Bewegungsmessvorrichtung (3) gemäß Anspruch 1,
wobei die Hülse (18) ein erstes Hülsenelement (32) und ein zweites Hülsenelement (33), die fest miteinander verbunden sind, aufweist, wobei das zweite Hülsenelement (33) eingerichtet ist mit der Welle (1) in der zweiten Hülsenebene (17) in dem Betrieb fest verbunden zu sein, eine kürzere axiale Erstreckung als ein Axialabstand von der ersten Hülsenebene (15) zu der zweiten Hülsenebene (17) hat und eine größere Verformung bei einer gleichen Krafteinwirkung als das erste Hülsenelement (32) hat, das eingerichtet ist mit der Welle (1) in der ersten Hülsenebene (15) in dem Betrieb fest verbunden zu sein, wodurch die Hülsenrelativbewegung mittels der Messung einer Verformung des zweiten Hülsenelements (33) von dem Sensor (8) bestimmbar ist.

4. Bewegungsmessvorrichtung (3) gemäß Anspruch 1,
wobei die Hülse (18) ein erstes Hülsenelement (19), ein zweites Hülsenelement (21) und ein drittes Hülsenelement (20) aufweist, wobei das erste Hülsenelement (19) eingerichtet ist mit der Welle (1) in der ersten Hülsenebene (15) in dem Betrieb fest verbunden zu sein und im Wesentlichen die gleiche Verformung bei einer gleichen Krafteinwirkung wie das zweite Hülsenelement (21) hat, das eingerichtet ist mit der Welle (1) in der zweiten Hülsenebene (17) in dem Betrieb fest verbunden zu sein, wobei das dritte Hülsenelement (20), das zwischen dem ersten Hülsenelement (19) und dem zweiten Hülsenelement (21) angeordnet ist und mit dem ersten Hülsenelement (19) und dem zweiten Hülsenelement (21) fest verbunden ist, eine kürzere axiale Erstreckung als ein Axialabstand von der ersten Hülsenebene (15) zu der zweiten Hülsenebene (17) hat und eine größere Verformung bei der gleichen Krafteinwirkung als das erste Hülsenelement (19) und das zweite Hülsenelement (21) hat, wodurch die Hülsenrelativbewegung mittels der Messung einer Verformung des dritten Hülsenelements (20) von dem Sensor (8) bestimmbar ist.

5. Bewegungsmessvorrichtung (3) gemäß Anspruch 2 oder 3,
wobei jenes der Hülsenelemente, das bei der gleichen Krafteinwirkung die größere Verformung als die anderen der Hülsenelemente hat, die um mindestens zehn Mal größere Verformung bei der gleichen Krafteinwirkung hat.

6. Bewegungsmessvorrichtung (3) gemäß Anspruch 1,
wobei die Hülse (18) ein erstes Hülsenelement (25) und ein zweites Hülsenelement (26) aufweist, wobei das erste Hülsenelement (25) eingerichtet ist mit der Welle (1) in der ersten Hülsenebene (15) in dem Betrieb fest verbunden zu sein und das zweite Hülsenelement (26) eingerichtet ist mit der Welle (1) in der zweiten Hülsenebene (17) in dem Betrieb fest verbunden zu sein, und zwischen den beiden Hülsenelementen (25, 26) ein Spalt (31) derart angeordnet ist, dass die beiden Hülsenelemente (25, 26) frei zueinander bewegbar sind und der Spalt (31) eine kürzere axiale Erstreckung als ein Axialabstand von der ersten Hülsenebene (15) zu der zweiten Hülsenebene (17) hat, wodurch die Hülsenrelativbewegung durch die Messung der Relativbewegung des ersten Hülsenelements (25) zu dem zweiten Hülsenelement (26) von dem Sensor (8) bestimmbar ist.

7. Bewegungsmessvorrichtung (3) gemäß einem der Ansprüche 3 bis 6,
wobei die verschiedenen Hülsenelemente in einer radialen Richtung bezogen auf die Hülsenrotationsachse (27) oder in der Axialrichtung nebeneinander angeordnet sind.

8. Bewegungsmessvorrichtung (3) gemäß einem der Ansprüche 3 bis 7,
wobei der Sensor (8) eingerichtet ist eine Winkelveränderung zwischen zwei der Hülsenelemente und/oder eine Längenveränderung desjenigen der Hülsenelemente, das die größere Verformung bei gleicher Krafteinwirkung hat, zu bestimmen, insbesondere weist der Sensor (8) einen Dehnmesstreifen auf, der auf eines der Hülsenelemente, das die größere Verformung bei gleicher Krafteinwirkung hat, aufgebracht ist.

9. Bewegungsmessvorrichtung (3) gemäß einem der vorangehenden Ansprüche, wobei die Wellenrelativbewegung eine Torsion der Welle (1) ist.

10. Maschine (30) mit einer der Bewegungsmessvorrichtungen (3) gemäß einem der vorangegangenen Ansprüche und der Welle (1), die in der ersten Hülsenebene (15) und in der zweiten Hülsenebene (17) fest mit der Hülse (18) verbunden ist.

11. Maschine (30) gemäß Anspruch 10,
wobei eine Wellenrotationsachse (29) der Welle (1) im Wesentlichen koaxial mit der Hülsenrotationsachse (27) angeordnet ist.

12. Maschine (30) gemäß Anspruch 10 oder 11, wobei die Bewegungsmessvorrichtung (3) radial außen an der Welle (1) angeordnet ist oder wobei die Welle (1) in ihrem Inneren einen insbesondere rotationssymmetrischen Hohlraum (2) aufweist, in dem die Bewegungsmessvorrichtung (3) angeordnet ist.

13. Verfahren zum Kalibrieren einer Bewegungsmessvorrichtung (3) mit den Schritten:
a) Bereitstellen der Bewegungsmessvorrichtung (3) gemäß einem der Ansprüche 1 bis 9;
b) Bereitstellen einer Kalibrierwelle, die zumindest eine Teilnachbildung der Welle (1) ist;
c) Festes Verbinden der Bewegungsmessvorrichtung (3) mit der Kalibrierwelle in der ersten Hülsenebene (15) und in der zweiten Hülsenebene (17) an einer Kalibrierwellenposition;
d) Aufbringen eines für eine Kalibrierung benötigten vorherbestimmten Drehmoments auf die Kalibrierwelle und damit zeitgleiches Aufnehmen einer Messgröße mit dem Sensor (8) an der Kalibrierwelle;
e) Erstellen einer Kalibrierfunktion unter Heranziehen der mit dem Sensor (8) aufgenommenen Messgröße und des auf die Kalibrierwelle aufgebrachten vorherbestimmten Drehmoments;
f) Lösen der Bewegungsmessvorrichtung (3) von der Kalibrierwelle;
g) Festes Verbinden der Bewegungsmessvorrichtung (3) mit der Welle (1) in der ersten Hülsenebene (15) und in der zweiten Hülsenebene (17) an einer vorherbestimmten Wellenposition der Welle (1), wobei die Wellenposition der Kalibrierwellenposition entspricht.

14. Verfahren gemäß Anspruch 13, mit den zusätzlichen Schritten:
a1) Verdrillen der Hülse (18) mit einem für eine Vorkalibrierung benötigten vorherbestimmten Drehwinkel und zeitgleiches Aufnehmen einer Vorkalibriermessgröße mit dem Sensor (8);
a2) Erstellen einer Vorkalibrierfunktion unter Heranziehen der mit dem Sensor (8) aufgenommenen Vorkalibriermessgröße und des vorherbestimmten Drehwinkels;
wobei in Schritt e) die Kalibrierfunktion zusätzlich unter Heranziehen der Vorkalibrierfunktion erstellt wird.

15. Verfahren gemäß Anspruch 13 oder 14,
wobei die Kalibrierwelle lediglich die Teilnachbildung der Welle (1) ist.

16. Verfahren gemäß einem der Ansprüche 13 bis 15, mit dem Schritt:
h) Aufnehmen mindestens einer weiteren Messgröße mit dem Sensor (8) an der Welle (1);
und insbesondere mit dem Schritt:
i) Bestimmen eines an der Welle (1) anliegenden Drehmoments unter Heranziehen der weiteren Messgröße und der Kalibrierfunktion.
